# EUROPÄISCHE PATENTSCHRIFT

(11) **EP 0 863 812 B1**
(45) Veröffentlichungstag und Bekanntmachung des Hinweises auf die Patenterteilung: **19.03.2003**
(21) Anmeldenummer: 96937156.6
(22) Anmeldetag: 18.11.1996
(51) Int. Cl.: B32B 15/08

(54) **Verwendung von bestimmten Verpackungsbehältern in einem Verfahren zum Gefriertrocknen von pharmazeutischen Formulierungen**
Use of certain packaging containers in a process for the lyophilisation of pharmaceutical formulations
Utilisation de certains conteneurs d'emballage dans un procédé de lyophilisation de formulations pharmaceutiques

(30) Priorität: 28.11.1995 CH 337395
(43) Veröffentlichungstag der Anmeldung: 16.09.1998
(73) Patentinhaber: Alcan Technology & Management AG, 8212 Neuhausen am Rheinfall (CH)
(72) Erfinder: MUGGLI, Olivier, Yves, A., Louisville, KY 40245 (US); PASBRIG, Erwin, D-78224 SINGEN (DE)
(86) Internationale Anmeldenummer: CH9600409
(87) Internationale Veröffentlichungsnummer: WO97019811

(56) Entgegenhaltungen:
- EP-A- 0 203 265
- EP-A- 0 317 237
- EP-A- 0 414 636
- EP-A- 0 455 584
- EP-A- 0 474 587
- WO-A-94/19184
- DE-A- 3 905 370
- US-A- 4 216 268
- US-A- 4 874 656

## Beschreibung

Die Erfindung betrifft die Verwendung von formsteifen Verpackungsbehältern mit aus der Fläche herausgeformten Vertiefungen aus einem durch Kaltumformung verformten Folienverbund in einem Verfahren zum Gefriertrocknen von pharmazeutischen Formulierungen.

Es ist bekannt, beispielsweise pharmazeutische Produkte, medizinische Hilfsmittel, Diagnostika und andere licht-, gas- und/oder feuchtigkeitsempfindliche Produkte durch Verpackungen zu schützen. Besonders geeignete Verpackungen sind Formpackungen, welche durch strecken, streckziehen oder tiefen erzeugt werden. Um Verpackungen licht-, gas- und dampfundurchlässig zu machen, muss das Material, aus dem die Verpackung hergestellt ist, eine Barriereschicht aufweisen. Eine besonders geeignete Barriereschicht kann beispielsweise eine Metallfolie oder ein Metallband sein. Da die Metallfolie nicht alle Anforderungen, die an ein Verpackungsmaterial gestellt werden, zu erfüllen vermag, werden in der Praxis ein- oder beidseitig der Metallfolie weitere Schichten und dabei insbesondere Kunststoffschichten angebracht. Solche Schichten können beispielsweise extrusionskaschierte oder mittels eines Haftvermittlers aufgebrachte Schichten in Form von Folien aus thermoplastischen Kunststoffen sein. Mit solchen mehrschichtigen Verbunden gelingt es, gut verarbeitbare Verpackungsmaterialien zur Verfügung zu stellen, welche beispielsweise zu Bodenteilen von Blisterpackungen oder von anderen Packungen verarbeitet werden können.

In der WO 94/19184 wird ein Verbundwerkstoff beschrieben, der im wesentlichen aus einer beidseitig mit einer Kunststoffschicht beschichteten Metallschicht besteht, wobei die Kunststoffschicht eine Polyamidschicht ist.

Es wurde nun gefunden, dass keiner der Verbunde, welche in der Praxis Eingang gefunden haben, nach dem Formen zu Verpackungen oder Teilen, wie Bodenteile von Verpackungen, eine genügend hohe Planlage und/oder Steifigkeit für die weitere Verarbeitung aufweisen. Auch wurde gefunden, dass Verbunde, die eine zu geringe Planlage und/oder Steifigkeit aufweisen, nach dem Verformen zu Teilen von Verpackungen, wie Bodenteile von Blister- oder Durchdrückpackungen, diese verformten Teile ebenfalls eine ungenügende Planlage und/oder Steifigkeit aufweisen. Mit Planlage ist die Tendenz gemeint, dass der Verbund eine Rolltendenz aufweist oder aus dem Verbund gefertigte Formteile sich aufwölben und beispielsweise auf einer ebenen Oberfläche nicht gleichmässig aufliegen, sondern z.B. sich wellen-, bogen- oder kuppelförmig aufwölben.

Aufgabe vorliegender Erfindung ist es deshalb, einen Verpackungsbehälter vorzuschlagen, der aus einem Verbund gefertigt ist und der Verpackungsbehälter eine hohe Planlage und/oder eine hohe Steifigkeit aufweist.

Erfindungsgemäss wird das dadurch erreicht, dass der Folienverbund folgenden Schichtaufbau enthält:
a) eine Polyvinylchloridfolie einer Dicke von 30 µm bis 100 µm, oder eine Polyolefinfolie einer Dicke von 30 µm bis 100 µm, oder eine Polyesterfolie in einer Dicke von 30 µm bis 100 µm,
b) eine bi- oder monoaxial gereckte Folie aus der Reihe der Polyamidfolien in einer Dicke von 12 µm bis 50 µm, oder einen bi- oder monoaxial gereckten Kunststoffolienverbund aus zwei Folien aus der Reihe der Polyamidfolien in einer Dicke von je 10 µm bis 50 µm,
c) eine Metallfolie in einer Dicke von 20 bis 200 µm,
a₁) eine Polyvinylchloridfolie einer Dicke von 30 µm bis 100 µm, oder eine Polyolefinfolie einer Dicke von 30 µm bis 100 µm,
wobei die Folien in der obengenannten Reihenordnung zugegen sind und mittels Kaschierung, Extrusionskaschierung oder Haftvermittler zu einem Schichtverbund verbunden sind, und a) die nach aussen gerichtete Aussenseite und a₁) die nach innen zum Verpackungsinhalt gerichtete Innenseite ist, und der Verpackungsbehälter eine hohe Planlage und Steifigkeit aufweist.

Beispiele von Kunstoffolien a) und a₁) auf Basis von Polyvinylchlorid sind (PVC) sind Vinylkunststoffe, enthaltend Vinylchlorideeinheiten in deren Struktur, wie Copolymere des Vinylchlorids mit Vinylestern von aliphatischen Säuren, Copolymere des Vinylchlorids mit Estern der Acryl- oder Methacrylsäure oder mit Acrylnitril, Copolymere des Vinylchlorids mit Dienverbindungen und ungesättigten Dicarboxylsäuren oder deren Anhydriden, Copolymere des Vinylchlorids und Vinylidenchlorids mit ungesättigten Aldehyden, Ketonen usw. oder Polymere und Copolymere des Vinylidenchlorids mit Vinylchlorid oder anderen polymerisierbaren Verbindungen. Die Thermoplaste auf Vinyl-Basis können auch auf an sich bekannte Weise mit Primär- oder Sekundärweichmacher weichgemacht sein. Folien aus PVC können fallweise auch monoaxial (oPVC) oder biaxial gereckt sein.

Sind die Kunststoffolien a) aus Polyestern, so sind Beispiele für die Polyester Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -0- unterbrochen sind, wie z.B. Polyethylenterephthalat (PET-Folien), Polypropylenterephthalat, Polybutylenterephthalat (Polytetramethylenterephthalet), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe. Bevorzugt werden Polyethylenterephthalat-Folien. Andere zweckmässige Polyester sind in der Fachwelt unter dem Kürzel PEN bekannt.

Andere Polyester sind Copolymere der Terephthalsäure und einer weiteren Polycarboxylsäure mit wenigstens einem GlykoL Zweckmässig sind dabei die Copolyester der TerephthalSäure, Ethylenglykol und einem zusätzlichen GlykoL Bevorzugt sind glykolmodifizierte Polyester, die der Fachwelt als PETG bekannt sind.

Zweckmässige Polyester sind Polylalkylenterephthalate mit Alkylengruppen oder -resten mit 2 bis 10 Kohlenstoffatomen und Polylalkylenterephthalate mit Alkylengruppen oder -resten mit 2 bis 10 Kohlenstoffatomen, die durch ein oder zwei -0- unterbrochen sind.

Weitere bevorzugte Polyester sind Polylalkylenterephthalate mit Alkylengruppen oder -resten mit 2 bis 4 Kohenstoffatomen und ganz besonders bevorzugt sind Polyethylenterephthalate. Zu diesen Polyethylenterephthalaten sind auch A-PET, PETP und das genannte PETG oder G-PET zu zählen.

Beispiele von Polyolefinen für die Kunststoffolien a) und a₁) sind Polyethylene (PE), z.B. Polyethylen hoher Dichte (HDPE, Dichte grösser als 0,944g/cm³). Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dirchte 0,916-0,925 g/cm³), beispielsweise als nicht orientierte (PE-Folie) oder monoaxial- oder biaxial orientierte Folien, (oPE-Folie), Polypropylene (PP), wie axial oder biaxial orientiertes Polypropylen (oPP-Folie) oder gegossenes (cast) Polypropylen (cPP-Folie), amorphes oder kristallines Polypropylen oder Gemische davon, ataktisches oder isotaktisches Polypropylen oder Gemische davon, Poly-1-buten, Poly-3-methylbuten, Poly-4-methylpenten und Copolymere davon, dann Polyethylen mit Vinylacetat, Vinylalkohol, Acrylsäure usw., wie z.B. Ionomerharze, wie Copolymerisate von Ethylen mit etwa 11 % Acrylsäure, Methacrylsäure, Acrylestern, Tetrafluorethylen oder Polypropylen, ferner statistische Copolymere, Block-Copolymere oder Olefinpolymer-Elastomer-Mischungen. Bevorzugt sind Polyethylene hoher Dichte und Polypropylene, sowie Ionomere, z.B. bekannt unter dem Handelsnamen Surlyn, und Ethylen-Acrvlsäure-Copolymere (EAA).

Die Kunststofffolien b) und b₁₎ sind Polyamidfolien (PA), es gehören zu den Polyamiden beispielsweise Polyamid 6, ein Homopolymerisat aus ε-Caprolactam (Polycaprolactam); Polyamid 11, Polyamid 12, ein Homopolymerisat aus ω-Laurinlactam (Polylaurinlactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendode-canamid) oder Polyamid 6-3-T, ein Homopolykondensat aus Trimethylhexamethylendiamin und Terephthalsäure (Polytrimethylhexamethylenterephthalamid), sowie Gemische davon. Folien aus Polyamid sind mono- oder biaxial gereckt (oPA).

Sind die genannten Kunststoffe extrudierbar, so können sie durch Extrusion dem Verbund auch als Extrusionsschicht zugeführt werden.

Die Schicht c), betreffend eine Metallfolie, weist eine Dicke von 20 bis 200 µm auf, wobei Dicken von 20 bis 150 µm zweckmässig und von 30 bis 60 µm bevorzugt sind. Die Metallfolie kann aus Eisen, Stahl, Nickel, Kupfer, Zinn, Bronze, Messing, Aluminium usw. sein. Vorteilhaft ist die Metallfolie aus Aluminium mit einem Reinheitsgrad von 99,95 % bis 97 % (Gew.-%), wobei der Rest die unvermeidlichen begleitenden Verunreinigungen bzw. Legierungselemente darstellen. Beispiele von Legierungen sind solche, mit dem Hauptbestandteil Aluminium und den Legierungselementen Fe; Si; Mg; Mn; Ti und/oder Cu.

Die Schichten b) und b₁), d.h. die bi- oder monoaxial geneckten Folien aus der Reihe der Polyamide weisen eine Dicke von 12 bis 50 µm auf.

Um die verschiedenen beschriebenen Schichten, d.h. a) auf b), b) auf c), c) auf a₁) oder c) auf b₁) und b₁) auf a₁), aneinander festzulegen, können diese mit Kaschiermitteln, wie Lakken, Kaschierklebern und/oder Haftvermittlern und gegebenenfalls Vorlacken durch Kaschieren, durch Heisskalandrieren, durch Extrusionsbeschichten, durch Coextrusionsbeschichten oder durch eine Kombinationen dieser Verfahren zu den Verbunden, Laminaten oder Folienverbunden verarbeitet werden.

Geeignete Kaschierkleber können lösungsmittelhaltig oder lösungsmittelfrei und auch wasserhaltig sein. Beispiele von Kaschierklebern sind lösungsmittelhaltige, lösungsmittelfreie oder wässrige Acrylatkleber oder Polyurethan-Kleber-Systeme. Aber auch Klebstoffe welche unter Einwirkung von elektromagnetischen Strahlen (z.B. UV; Elektronen-Strahlen) aushärten, können eingesetzt werden.

Bevorzugt werden Kaschierkleber auf Polyurethan-Basis.

Als Haftvermittler können beispielsweise Di-isocyanat oder aliphatische Polyester eingesetzt werden. In der Regel werden diese Haftvermittler nur zwischen den nach aussen gerichteten Schichten angewendet.

Geeignete Lacke sind z.B. Lacke auf der Basis von Acrylaten, Epoxidharzen, Melaminharzen, Hamstoffharzen, Polyurethanen, Zellulosenitrat, Polyester und Mischungen derselben. Die Lacke beispielsweise können lösemittelbasierend oder auf wässriger Basis sein oder können Ein-, Zwei- oder Mehrkomponenten-Systeme sein. Die Lacke sind beispielsweise durch Trocknen, durch Wärme, chemisch und/oder durch Strahlen (UV; Elektronenstrahlen; IR) härtbar.

Zweckmässig werden die Kaschiermittel zwischen den einzelnen Schichten der Verbunde für die erfindungsgemässen Verpackungsbehälter in einer Dicke von 0.1 µm bis 12 µm angewendet.

Der Kaschierkleber kann beispielsweise in Mengen von 1 bis 10 g/m² vorzugsweise in Mengen von 2 bis 8 g/m² und insbesondere in Mengen von 3 bis 6 g/m² angewendel werden. Die Kaschierkleber können auch in solchen Mengen angewendet werden, dass sie Schichten von wenigstens 0.1 µm Dicke und maximal 12 µm Dicke ausbilden.

Die Metalloberfläche kann durch entsprechende Vorbehandlung (z.B. bürsten, chromatieren, Ionisierungs-, Ozon-, Korona-, Flamm- oder Plasmabehandlung) eine verbesserte Haftung für den Kleber oder Lack oder für eine Extrusionsschicht aufweisen. Zur Unterstützung und Verbesserung der Verbundhaftung der Lacke, Haftvermittler oder Kaschierkleber zwischen den Kunststoffolien oder von extrudierten Schichten, ist es oft zweckmässig den Folien auf den kleberzugewandten Seiten oder den Extrudaten eine ausreichende Oberflächenspannung zu vermitteln. Die Erhöhung der Oberflächenspannung kann vorzugsweise durch eine lonisierungs-, Ozon-, Plasma-, Flamm- oder eine Koronavorbehandlung erfolgen.

Die Verbindung zwischen den einzelnen Schichten in den Verbunden kann auch durch Extrusionskaschierung oder Heisskalandrierung erhalten werden.

Die erfindungsgemäss zuverwendenden Verpackungsbehälter können auf ihrer Innenseite, d.h. der dem Füllgut zugewandten Seite, fallweise auch auf ihrer Aussenseite, eine Siegelschicht, wie eine Siegelfolie oder einen Siegellack aufweisen. Die Siegelfolien oder Siegellacke können beispielsweise Polyolefine enthalten oder daraus bestehen. Die Siegelschicht ermöglicht es, auf einem Verpackungsbehälter nach vorliegender Erfindung einen Deckel anzubringen. Solche Deckel können beispielsweise Deckelfolien sein, die über eine Schulter am Verpackungsbehälter angesiegelt werden. Geeignete Deckelfolien können eine Metallfolie, wie eine Aluminiumfolie, enthalten und auf der Metallfolie kann auf einer oder beiden Seiten Kunststoffolien und/oder Lacke aufgebracht sein. Auf wenigstens einer Seite der Deckelfolie kann eine äusserste Schicht in Form einer Siegelschicht vorgesehen sein. Über die Siegelschicht kann die Deckelfolie mit dem Verpackungsbehälter verbunden werden.

Auf der Innenseite und/oder der Aussenseite oder gegen die Innen- und/oder die Aussenseite gerichtet, jeweils auf einen erfindungsgemässen Verpackungsbehälter bezogen, können die Verbunde Lacke und/oder Druckmuster aufweisen.

Beispielsweise können die aussenliegende und/oder die innenliegende Folie des Verbundes auf deren Innenseite, d.h. dem Verbund zugewandt, einen Konterdruck aufweisen. Ein Konterdruck ist besonders für durchsichtige und durchscheinende Folien geeignet.

Es ist auch möglich die aussenliegende und/oder die innenliegende Folie auf deren Aussenseiten mit einem Druckmuster zu versehen und fallweise das Druckmuster mit einem Lack abzudecken. Es kann auch die aussen- und/oder die innenliegende Seite des Verbundes mit einem Lack versehen werden, wobei der Lack fallweise auch bedruckt sein kann und/oder auf den Abpackanlagen bedruckbar ist, beispielsweise mit Hilfe von UV, Lösemittel oder Laseroder Elektronenstrahlen.

Es ist möglich, Lackschichten, die auch gefärbt sein können, zwischen anderen, als der aussen- resp. innenliegenden Schicht und der nächstinneren Schicht vorzusehen. Die zur Anwendung gelangenden Folien oder Extrusionsschichten können transparent, durchscheinend oder opak sein und können klar oder teilweise oder ganz gefärbt sein.

Typische Beispiele von erfindungsgemäss zuverwendenden Verpackungsbehältern sind aus Verbunden aus einer Aluminiumfolie oder Dünnband in einer Dicke von 20 bis 150 µm (Schicht c)) und einer bi- oder monoaxial gereckten Folie oder einem Verbund aus zwei Folien aus der Reihe der Polyamid- Folien, mit einer Dicke von 12 bis 50 µm (Schicht b), wobei die Schicht b) eine der beiden Seiten der Schicht c) bedeckt. Die beiden Schichten b) und c) sind vorteilhaft mittels eines Kaschiermittels verbunden. Auf der freien Seite der Schicht b) ist über eine Kaschiermittelschicht die Schicht a), vorzugsweise eine PVC-Folie in einer Dicke von 30 bis 100 µm oder eine PET-Folie in einer Dicke von 30 bis 100 µm oder eine PE-Folie in einer Dicke von 30 bis 100 µm oder eine cPP-Folie in einer Dicke von 30 bis 100 µm oder eine PP-Folie in einer Dicke von 30 bis 60 µm angeordnet. Auf der freien Seite der Schicht c) dieses Teilverbundes werden nachfolgend beschriebene weitere Schichten angeordnet.

In einer ersten Ausführungsform kann der oben genannte Teilverbund auf der noch freien Seite der Schicht c) ist die Schicht a₁), in bevorzugter Weise eine PVC-Folie in einer Dicke von 30 bis 100 µm, eine PET-Folie in einer Dicke von 30 bis 100 µm, eine PE-Folie in einer Dicke von 30 bis 60 µm, eine PP-Folie in eine Dicke von 30 bis 60 µm oder eine cPP-Folie in einer Dicke von 30 bis 100 µm angeordnet.

In einer zweiten Ausführungsform kann der oben genannte Teilverbund auf der noch freien Schicht c) beispielsweise eine Schicht b₁), eine oPA-Folie in einer Dicke von 15 bis 25 µm angebracht und über eine Schicht eines Kaschiermittels kann die Schicht a₁), eine PE-Folie in einer Dicke von 30 bis 100 µm oder eine PP-Folie in einer Dicke von 30 bis 60 µm oder eine cPP-Folie in einer Dicke von 30 bis 100 µm oder eine PET-Folie in einer Dicke von 30 bis 100 µm oder eine PVC-Folie in einer Dicke von 30 bis 100 µm angeordnet sein.

Bevorzugte Beispiele von erfindungsgemässen Verpackungsbehältern weisen Verbunde auf, mit einem Schichtaufbau, enthaltend

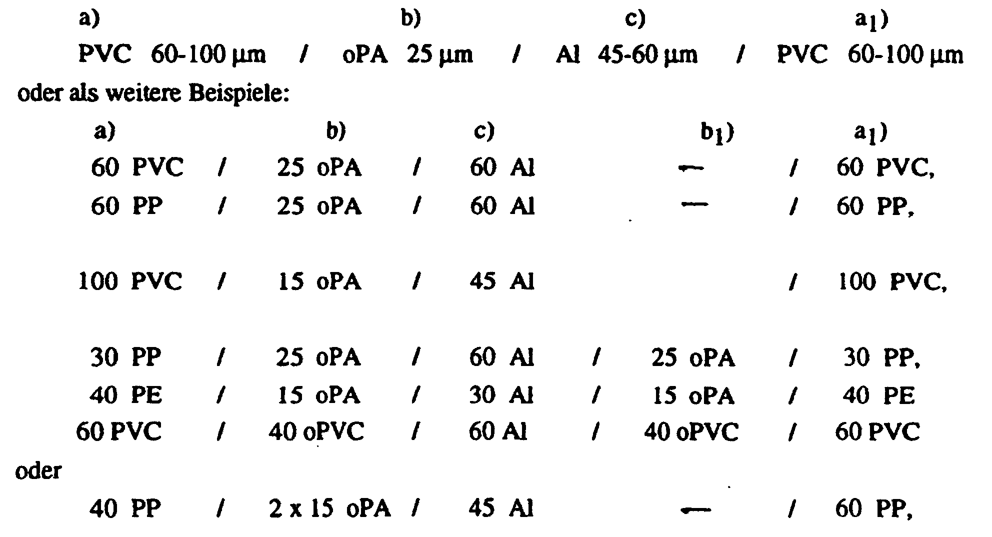

wobei die Zahl die Dicke der Schicht in µm angibt und PVC Polyvinylchlorid, oPVC monoaxial orientiertes Polyvinylchlorid, PP Polypropylen, PET Polyethylenterephthalat, PE Polyethylen, oPA orientiertes Polyamid, PEN Polyester des Typus PEN, Al Aluminiumfolie, oPP orientieres Polypropylen und PP Polypropylen bedeuten.

Typische Beispiele aus der Praxis sind nachfolgend aufgeführt. Die Kaschiermittelschichten weisen jeweils eine Dicke von 0,1 bis 10,0 µm auf.

### Beispiel 1)

a) PVC-Folie 30 bis 100 µm Kaschiermittel
b) oPA-Folie 10 bis 50 µm Kaschiermittel
c) Al-Folie 20 bis 100 µm Kaschiennittel
a₁) PVC-Folie 30 bis 100 µm

### Beispiel 2)

a) PET-Folie 30 bis 100 µm Kaschiermittel
b) oPA-Folie 2 bis 50 µm Kaschiermittel
c) Al-Folie 20 bis 150 µm Kaschiermittel Druck
a₁) PVC-Folie 30 bis 100 µm

### Beispiel 3)

a) cPP-Folie 30 bis 100 µm Haftvermittler
b) oPA-Folie 12 bis 50 µm Haftvermittler
c) Al-Folie 20 bis 150 µm Haftvermittler
b₁) oPA-Folie 12 bis 50 µm Haftvermittler
a₁) cPP-Folie 30 bis 100 µm

Die Beispiele 2 und 3 sind als allgemeine Offenbarung von Verbundstrukturen anzuschen.

Die Verpackungsbehälter nach vorliegender Erfindung werden durch Kaltumformen hergestellt. Mit Kaltumformen werden beispielsweise die Verfahren Streckziehen oder Tiefziehen oder auch ein kombiniertes Verfahren von Tief- und Streckziehen umfasst. Hierbei kann mit einer Stütztemperatur von 30 bis 150° C, vorteilhaft von 40 bis 100° C, gearbeitet werden. Beim Verformen werden beispielsweise Tiefungsverhältnisse von 2 bis 4, vorzugsweise 2,5 bis 3,5, (Breite/Höhe) erzielt.

Unter Verpackungsbehälter werden durch Kaltumformung verformte Bodenteile oder Deckelteile oder Boden- und Deckelteile verstanden. Es können die Bodenteile oder die Deckelteile durch Kaltumformen verformt sein und eine Deckelfolie resp. eine Bodenfolie kann entsprechend den Verschluss des Verpackungsbehälters bilden. Es kann auch sowohl der Boden- als auch der Deckelteil durch Kaltumformen verformt sein, wobei zweckmässig die eingeformten Vertiefungen von Boden- und Deckelteil einander gegenüber liegen. Die Verpackungsbehälter können eine oder mehrere, z.B. 2 bis 200, zweckmässig 5 bis 50. Vertiefungen aufweisen, wobei jede der Vertiefungen zweckmässig von einer Schulter umgeben ist und die Schultern eine ebene Schulterfläche bilden. Die in der Regel aus der Fläche heraus geformten Vertiefungen können alle gleich oder verschieden sein. Ein nach vorliegender Erfindung zuverwendender Verpackungsbehälter kann beispielsweise ein Bodenteil einer Formpackung, wie einer Menueschale, z.B. für menschliche oder tierische Nahrungsmittel, einer Durchdrückpackung oder einer Blisterpackung, wie einer Blisierpackung für Pharmazeutika oder einer Blisterpackung zur Aufnahme von Präparaten, zur weiteren Verwendung in medizinischen Geräten. und anderer zu schützender Produkte darstellen. Der verformte Bodenteil oder Deckelteil kann mit einem flächenhaften Material, wie einer Folie oder einem Folienverbund als Deckelmaterial abgedeckt und insbesondere über die Schulterfläche des verformten Verpackungsbehälters verschlossen werden. Bevorzugt sind durchstossbare Deckelmaterialien. Besonders geeignete Deckelmaterialien sind Aluminiumfolien oder aluminiumfolienhaltige Verbunde oder durch Füllstoffe spröde gemachte Kunststoffolien. Zweckmässig tragen die Deckelfolien auf wenigstens einer Seite eine siegelbare Schicht. Zum Verschliessen (Siegelung) eignen sich alle bekannten Verfahren (Heissiegelung, Ultraschall, Induktionserwärmung, Hochfrequenzerwärmung). Der Verpackungsbehälter wird vorteilhaft über eine ganz oder teilflächige Siegelung im Bereich der Schulterfläche mit dem Deckelmaterial verbunden. Die Vertiefungen sind von Schultern umgeben, welche die Schulterfläche bilden und jede Vertiefung kann durch die Siegelverbindung im Bereich der Schultern jeder Vertiefung dicht verschlossen sein. Das Öffnen eines derart verschlossenen Verpackungsbehälters kann durch z.B. aufschneiden oder abschälen (peelen) des Deckelmaterials erfolgen oder der Deckelverschluss kann ein Festverschluss sein oder das Deckelmaterial kann durch Durchstossen mittels des Inhaltes aufgerissen werden. Fallweise kann das flächenhafte Material auch den Bodenteil darstellen und der Deckel ist der geformte Verpackungsbehälter. Im weiteren können auch Boden- und Deckelteil aus den erfindungsgemäss beschriebenen Verbunden gefertigt werden und einen erfindungsgemässen Verpackungsbehälter ausbilden.

Von besonderem Interesse sind erfindungsgemäss zuverwendende Verpackungsbehälter mit einem Bodenteil mit einer Mehrzahl an eingeformten Vertiefungen aus einem der beschriebenen Verbunde, wobei der Bodenteil in der Draufsicht eine runde Form aufweist und die Vertiefungen konzentrisch. in beispielsweise einem oder zwei Ringen, angeordnet sind. Der Bodenteil wird beispielsweise mit einer durchstossbaren Deckelfolie abgedeckt und Bodenteil und Deckelfolie durch Siegelung trennfest miteinander verbunden. Die Verpackungsbehälter können in den Vertiefungen Diagnostika für medizinische Analysengeräte enthalten. Zur Verbesserung der Maschinengängigkeit können die Verpackungsbehälter z.B. an ihrem Aussenrand mechanisch oder optisch erfassbare Markierungen aufweisen.

Das Verbundmaterial kann als Endlosmaterial (Rollenwaren, Coil) gefertigt und als solches verformt und anschliessend in Einzelabschnitte aufgeteilt werden oder das Verbundmaterial kann in Einzelabschnitten gefertigt oder als Endlosmaterial gefertigt und in Einzelabschnitte geteilt werden und die Einzelabschnitte können verformt und weiterverwendet werden.

Vorliegende Erfindung umfasst die Verwendung der erfindungsgemässen Verpackungsbehälter zur Verpackung von Pharmazeutika, medizinischen Hilfsmitteln, Diagnostica und weitere temperatur-, licht-, gas- und/oder feuchtigkeitsempfindlichen Produkten. Dies bedeutet, dass die Verpackungsbehälter z.B. besonders zum Verpacken von Stoffen, die gegen Diffusion von Inhaltsstoffen, wie z.B. Gase. Lösungsmittel oder Aromastoffe aus der Verpackung heraus, geschützt werden sollen, geeignet sind. Weiters sind die Verpackungsbehälter auch zum Schutze der Inhaltsstoffe gegen Einflüsse von aussen, sowohl mechanischer Art, als auch gegen die Diffusion von Gasen, Dämpfen und Flüssigkeiten und gegen elektromagnetischen Strahlungen, wie Licht geschützt.

Das nach vorliegender Erfindung zuverwendende geformte Verpackungsmaterial weist eine hohe Planlage auf, d.h. auch nach dem Verformen wölben sich die Verpackungsbehälter oder die Vorprodukte nicht auf, weder als Endlosmaterial, noch als Einzelabschnitt, noch als geformter Verpackungsbehälter. Das geformte Verpackungsmaterial weist in der Regel eine hohe Steifigkeit auf, wobei unabhängig von der Steifigkeit immer eine hohe Planlage erhalten bleibt. Die Verpackungsbehälter sind dicht und weisen auch keine Rissbildung durch die Verarbeitung auf.

Die hohe Steifigkeit und Planlage kann durch einen symmetrischen Aufbau des Verbundmaterials zusätzlich verstärkt werden. Es wäre zu erwarten gewesen, dass eine Versteifung eines Verbundmaterials sich insbesondere durch eine Verstärkung der inneren Schicht erzielen liesse. Es wurde jedoch gefunden, dass durch eine zusätzliche Aussenschicht und auch durch einen symmetrischen Aufbau in überraschenderweise eine Verbesserung der Eigenschaften der Verbunde, und der Verpackungsbehälter daraus, erzielt werden kann.

Im weiteren wird eine Migrationsreduktion, sowohl von innen nach aussen, als auch umgekehrt -- dies auch durch eine geringe Dicke der Siegelnaht zwischen Verpackungsbehälter und Deckel bedingt -- beobachtet

Das Verbundmaterial weist eine hohe Verformbarkeit auf und es lassen sich Verpackungsbehälter in mannigfaltigen Formen herstellen.

Durch den symmetrischen Aufbau resultiert eine niedrigere Rückfederung beim Verformen des Verbundmaterials.

Durch den gewählten Aufbau wird eine Versteifung der Verpackungsbehälter durch den äusseren Verbundaufbau erhalten, aber gleichzeitig eine hohe Verformbarkeit erreicht bei einer minimalen Rückfederung.

## Patentansprüche

1. Verwendung von formsteifen Verpackungsbehältern mit aus der Fläche herausgeformten Vertiefungen aus einem durch Kaltumformung verformten Folienverbund in einem Verfahren zum Gefriertrocknen von pharmazeutischen Formulierungen, wobei der Folienverbund folgenden Schichtaufbau enthält:
a) eine Polyvinylchloridfolie einer Dicke von 30 µm bis 100 µm, oder eine Polyolefinfolie einer Dicke von 30 µm bis 100 µm, oder eine Polyesterfolie in einer Dicke von 30 µm bis 100 µm,
b) eine bi- oder monoaxial gereckte Folie aus der Reihe der Polyamidfolien in einer Dicke von 12 µm bis 50 µm, oder einen bi- oder monoaxial gereckten Kunststoffolienverbund aus zwei Folien aus der Reihe der Polyamidfolien in einer Dicke von je 10 µm bis 50 µm,
c) eine Metallfolie in einer Dicke von 20 bis 200 µm, a₁) eine Polyvinylchloridfolie einer Dicke von 30 µm bis 100 µm, oder eine Polyolefinfolie einer Dicke von 30 µm bis 100 µm,
wobei die Folien mittels Kaschierung, Extrusionskaschierung oder Haftvermittler zu einem Schichtverbund verbunden sind, und a) die nach aussen gerichtete Aussenseite und a₁) die nach innen zum Verpackungsinhalt gerichtete Innenseite ist, und der Verpackungsbehälter eine hohe Planlage und Steifigkeit aufweist.

2. Verwendung nach Anspruch 1, wobei die Kunststofffolie a) und/oder a₁) ungereckt ist.

3. Verwendung nach Anspruch 1, wobei der Verbund folgenden Schichtaufbau aufweist:
a) eine PVC-, PET-, PE-, cPP- oder PP-Folie in einer Dicke von 30 bis 100 µm zwischen a) und b) eine Kaschiermittelschicht,
b) eine bi- oder monoaxial gereckte Folie aus der Reihe der Polyamidfolien in einer Dicke von 12 µm bis 50 µm, oder einen bi- oder monoaxial gereckten Verbund aus zwei Folien aus der Reihe der Polyamidfolien, mit einer Dicke von 10 bis 50 µm,
zwischen b) und c) eine Kaschiermittelschicht,
c) eine Aluminiumfolie oder ein Aluminiumdünnband in einer Dicke von 20 bis 150 µm,
zwischen c) und a₁) eine Kaschiermittelschicht und
a₁) eine PVC-Folie in einer Dicke von 30 bis 100 µm, oder eine PE-Folie in einer Dicke von 30 bis 60 µm, oder eine PP-Folie in einer Dicke von 30 bis 60 µm, oder eine cPP-Folie in einer Dicke von 30 bis 100 µm.

4. Verwendung nach Anspruch 1, wobei der Verbund einen der fünf nachfolgend genannten Schichtaufbauten 1) bis 5) aufweist:
| | a) | b) | c) | a₁) |
|---|---|---|---|---|
| 1) | 60-100 PVC / | 25 oPA / | 45-60 Al / | 60-100 PVC, |
| 2) | 60 PVC / | 25 oPA / | 60 Al / | 60 PVC, |
| 3) | 60 PP / | 25 oPA / | 60 Al / | 60 PP, |
| 4) | 100 PVC / | 15 oPA / | 45 Al / | 100 PVC |
| oder | | | | |
| 5) | 40 PP / | 2 x 15 oPA / | 45 Al / | 60 PP, |
wobei die Zahl die Dicke der Schicht in µm angibt und PVC Polyvinylchlorid, PP Polypropylen, oPA orientiertes Polyamid und Al Aluminiumfolie bedeuten.

5. Verwendung nach Anspruch 1, wobei die Verpackungsbehälter dadurch erhältlich sind, daß die Verbunde durch Kaltumformen mittels Tiefziehen oder Streckziehen oder einer Kombination von Tiefziehen und Streckziehen mit Vertiefungen versehen werden.

6. Verwendung nach Anspruch 5, wobei das Kaltumformen der Verbunde mit einer Stütztemperatur von 40 bis 100° C geschicht.

7. Verwendung nach Anspruch 1, wobei der Verpackungsbehälter auf seiner Innenseite und/oder auf seiner Aussenseite eine Siegelschicht aufweist.

## Claims

1. Use of dimensionally rigid packaging containers with cavities formed from the surface made from a composite film shaped by cold forming in a process for freeze-drying pharmaceutical formulations, wherein the film composite contains the following layer structure:
a) a polyvinyl chloride film of a thickness of 30 µm to 100 µm, or
a polyolefin film of a thickness of 30 µm to 100 µm, or
a polyester film of a thickness of 30 µm to 100 µm,
b) a bi- or monoaxially oriented film from the range of polyamide films in a thickness of 12 µm to 50 µm, or a bi- or monoaxially oriented plastics film composite of two films from the range of polyamide films each in a thickness of 10 µm to 50 µm,
c) a metal foil in a thickness of 20 to 200 µm,
a₁) a polyvinyl chloride film of a thickness, of 30 µm to 100 µm, or
a polyolefin film of a thickness of 30 µm to 100 µm,
wherein the films/foils are joined together to form a multilayer composite by lamination, extrusion lamination or coupling agent, and a) is the outwardly directed outer side and a₁) the inner side directed inwards towards the package contents, and the packaging container exhibits elevated flatness and rigidity.

2. Use according to claim 1, wherein the plastics film a) and/or a₁) is unoriented.

3. Use according to claim 1, wherein the composite exhibits the following layer structure:
a) a PVC, PET, PE, cPP or PP film in a thickness of 30 to 100 µm
between a) and b) a laminating agent layer,
b) a bi- or monoaxially oriented film from the range of polyamide films in a thickness of 12 µm to 50 µm, or a bi- or monoaxially oriented composite of two films from the range of polyamide films, with a thickness of 10 to 50 µm,
between b) and c) a laminating agent layer,
c) an aluminium foil or a thin aluminium sheet in a thickness of 20 to 150 µm,
between c) and a₁) a laminating agent layer and
a₁) a PVC film in a thickness of 30 to 100 µm, or a PE film in a thickness of 30 to 60 µm, or a PP film in a thickness of 30 to 60 µm, or a cPP film in a thickness of 30 to 100 µm.

4. Use according to claim 1, wherein the composite exhibits one of the following five layer structures 1) to 5) stated below: 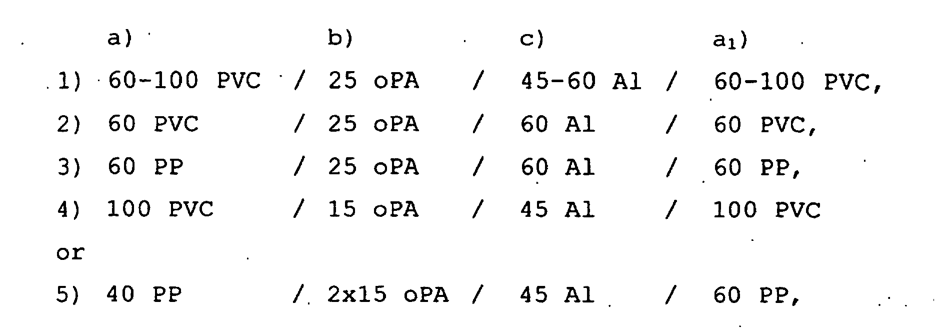 wherein the number states the thickness of the layer in µm and PVC means polyvinyl chloride, PP means polypropylene, oPA means oriented polyamide and Al means aluminium foil.

5. Use according to claim 1, wherein the packaging containers are obtainable in that the composites are provided with cavities by cold forming by means of thermoforming or stretch forming or a combination of thermoforming and stretch forming.

6. Use according to claim 5, wherein cold forming of the composites proceeds at a supporting temperature of 40 to 100°C.

7. Use according to claim 1, wherein the packaging container comprises a sealing layer on its inner side and/or its outer side.

## Revendications

1. Utilisation de conteneurs d'emballage de forme rigide comportant des creux formés à partir de la surface, en un composite en feuilles déformé par déformation à froid, dans un procédé de lyophilisation de formulations pharmaceutiques, le composite en feuilles contenant la structure en couches suivante :
a) une feuille de poly(chlorure de vinyle) d'une épaisseur de 30 µm à 100 µm, ou
une feuille de polyoléfine d'une épaisseur de 30 µm à 100 µm, ou
une feuille de polyester d'une épaisseur de 30 µm à 100 µm,
b) une feuille étirée biaxialement ou monoaxialement de la série des feuilles en polyamide d'une épaisseur de 12 µm à 50 µm, ou un composite en feuilles de matière plastique étiré biaxialement ou monoaxialement composé de deux feuilles de la série des feuilles en polyamide d'une épaisseur de 10 µm à 50 µm,
c) une feuille métallique d'une épaisseur de 20 µm à 200 µm,
a₁) une feuille de poly(chlorure de vinyle) d'une épaisseur de 30 µm à 100 µm, ou
une feuille de polyoléfine d'une épaisseur de 30 µm à 100 µm, les feuilles étant réunies par laminage, extrusion-laminage ou par un agent d'adhérence en un composite en couches, et a) étant la face externe dirigée vers l'extérieur et a₁) la face interne dirigée vers l'intérieur vers le contenu de l'emballage, et le conteneur d'emballage présentant une planéité et une rigidité élevées.

2. Utilisation selon la revendication 1, la feuille de matière plastique a) et/ou a₁) étant non étirée.

3. Utilisation selon la revendication 1, le composite présentant la structure en couches suivante :
a) une feuille de PVC, de PET, de PE, de cPP ou de PP d'une épaisseur de 30 à 100 µm
entre a) et b) une couche d'agent de laminage,
b) une feuille étirée biaxialement ou monoaxialement de la série des feuilles en polyamide d'une épaisseur de 12µm à 50 µm, ou un composite étiré biaxialement ou monoaxialement, composé de deux feuilles de la série des feuilles en polyamide, d'une épaisseur de 10 à 50 µm,
entre b) et c) une couche d'agent de laminage
c) une feuille d'aluminium ou une bande mince d'aluminium d'une épaisseur de 20 à 150 µm,
entre c) et a₁) une couche d'agent de laminage et
a₁) une feuille de PVC d'une épaisseur de 30 µm à 100 µm, ou une feuille de PE d'une épaisseur de 30 µm à 60 µm, ou une feuille de PP d'une épaisseur de 30 µm à 60 µm, ou une feuille de cPP d'une épaisseur de 30 µm à 100 µm.

4. Utilisation selon la revendication 1, le composite présentant une des cinq structures en couches 1) à 5) ci-après :
| | a) | b) | c) | a¹) |
|---|---|---|---|---|
| 1) | 60-100 PVC | 25 oPA | 45-60 Al | 60-100 PVC, |
| 2) | 60 PVC | 25 oPA | 60 Al | 60 PVC, |
| 3) | 60 PP | 25 oPA | 60 Al | 60 PP, |
| 4) | 100 PVC | 15 oPA | 45 Al | 100 PVC |
| ou | | | | |
| 5) | 40 PP | 2 x15 oPA | 45 Al | 60 PP, |
le nombre indiquant l'épaisseur de la couche en µm et PVC signifiant poly(chlorure de vinyle), PP polypropylène, oPA polyamide orienté et Al feuille d'aluminium.

5. Utilisation selon la revendication 1, les conteneurs d'emballage étant susceptibles d'être obtenus en ce que les composites sont dotés de creux par déformation à froid, par emboutissage profond ou par étirage-emboutissage ou par une combinaison d'emboutissage profond et d'emboutissage-étirage.

6. Utilisation selon la revendication 5, la déformation à froid des composites ayant lieu à une température de soutien de 40 à 100°C.

7. Utilisation selon la revendication 1, le conteneur d'emballage présentant une couche de scellement sur sa face interne et/ou sur sa face externe.
